# EUROPÄISCHE PATENTANMELDUNG

(11) **EP 4 050 230 A1**
(43) Veröffentlichungstag der Anmeldung: **31.08.2022**
(21) Anmeldenummer: 22152694.0
(22) Anmeldetag: 21.01.2022
(51) Int. Cl.: F16D 1/10, F16H 57/00, F16H 57/04

(54) **PASSVERZAHNUNG MIT ÖLFANGNUT**

(30) Priorität: 25.02.2021 DE 102021201766
(71) Anmelder: ZF Friedrichshafen AG, 88046 Friedrichshafen (DE)
(72) Erfinder: Fauck, Matthias, 58452 Witten (DE)
(74) Vertreter: ZF Friedrichshafen AG

(57) **Zusammenfassung**

Die Erfindung betrifft eine Welle (103) mit mindestens einem Sackloch, dass eine Innenverzahnung für eine Passverzahnung (101) ausbildet. Das Sackloch weist mindestens eine Nut (109, 111) zum Auffangen von Schmierstoff auf.

## Beschreibung

Die Erfindung betrifft eine Welle nach dem Oberbegriff von Anspruch 1.

Aus dem Stand der Technik sind Passverzahnungen bekannt, die durch Spritzöl geschmiert werden. Das Spritzöl gelangt bei niedrigeren Drehzahlen in die Passverzahnung. Erhöht sich die Drehzahl der Passverzahnung, wirken auf das in der Steckverzahnung befindliche Öl allerdings Zentrifugalkräfte, die das Öl aus der Passverzahnung herauspressen.

Der Erfindung liegt die Aufgabe zugrunde, die Drehzahlfestigkeit einer spritzgeschmierten Passverzahnung zu erhöhen. Diese Aufgabe wird gelöst durch eine Welle nach Anspruch 1. Bevorzugte Weiterbildungen sind in den Unteransprüchen enthalten und ergeben sich aus nachfolgender Beschreibung.

Eine Welle ist ein drehbar gelagertes Maschinenelement, das zur Übertragung von Drehbewegungen und Drehmomenten dient. Die Welle kann als separates Bauteil ausgeführt sein oder in ein weiteres Maschinenelement, etwa ein Zahnrad integriert sein. Insbesondere kann die Welle einstückig in das weitere Maschinenelement integriert sein.

Die erfindungsgemäße Welle weist mindestens ein Sackloch auf. Dies ist ein Loch mit genau einer Mündung. Es handelt sich also um ein Loch, welches die Welle nicht vollständig durchdringt.

Eine Passverzahnung, auch Steckverzahnung genannt, besteht aus einer Innenverzahnung und einer Außenverzahnung, die um eine gemeinsame Drehachse drehbar gelagert sind und so ineinandergreifen, dass eine formschlüssige drehfeste Verbindung zwischen der Innenverzahnung und der Außenverzahnung entsteht.

Vorliegend bildet das Sackloch die Innenverzahnung aus. Die Innenverzahnung ist also innerhalb des Sacklochs angeordnet. Vorzugsweise ist das Sackloch als Sacklochbohrung, das heißt als Sackloch mit kreisförmige Querschnitt, ausgeführt, in dessen Mantelfläche die Innenverzahnung eingebracht wurde.

Erfindungsgemäß weist das Sackloch mindestens eine Schmierstofffangnut auf. Dies ist eine Nut zum Auffangen von Schmierstoff. Eine Nut bezeichnet eine längliche Vertiefung einer Oberfläche. Vorliegend handelt es sich um eine längliche Vertiefung einer Innenfläche des Sacklochs

Die Nut befindet sich innerhalb des Sacklochs. Schmierstoff, der von der Nut aufgefangen wird, dient der Schmierung der Passverzahnung und beugt so Mangelschmierung vor.

In einer bevorzugten Weiterbildung ist das Sackloch zu einer Drehachse der Welle drehsymmetrisch. Dies impliziert, dass auch die Innenverzahnung und die Nut zu der Drehachse der Welle drehsymmetrisch sind. Drehsymmetrie ist hier im weiteren Sinne zu verstehen. Dies bedeutet, dass das Sackloch, die Innenverzahnung und die Nut bezüglich der Drehung um mindestens einen Winkel auf sich selbst abgebildet werden. Vorzugsweise entspricht die Anzahl der Winkel von Drehungen, welche das Sackloch, die Innenverzahnung und die Nut jeweils aufeinander abbilden, der Zahl der Zähne der Innenverzahnung.

In einer darüber hinaus bevorzugten Weiterbildung ist die Nut mindestens teilweise, vorzugsweise vollständig radial zu der Drehachse hin geöffnet. Dies ist von Vorteil, da die bei einer Drehung der Welle auf den in der Passverzahnung befindlichen Schmierstoff wirkende Zentrifugalkraft bewirkt, dass der Schmierstoff durch die Öffnung der Nut in die Nut eintritt.

Von der Drehachse ausgehend radial nach außen hin ist die Nut in einer darüber hinaus bevorzugten Weiterbildung mindestens teilweise, vorzugsweise vollständig geschlossen. Dies hat zur Folge, dass der bei einer Drehung der Welle in die Nut eingetretene Schmierstoff nicht aus der Nut entweichen kann und sich somit in der Nut sammelt.

Darüber hinaus bevorzugt ist eine Öffnung der Nut mindestens teilweise parallel zu der Drehachse weitergebildet. Dies bedeutet, dass mindestens eine parallel zu der Drehachse verlaufende Gerade einen Rand der Nut in zwei Punkten schneidet. Bevorzugt ist die Öffnung der Nut vollständig parallel zu der Drehachse ausgerichtet. In dem Fall schneidet jede durch einen Punkt des Rands der Nut verlaufende, parallel zu der Drehachse ausgerichtete Gerade einen weiteren Punkt des Rands der Nut.

In einer bevorzugten Weiterbildung ist die Welle mindestens teilweise vertikal ausgerichtet. Dies bedeutet, dass die Drehachse nicht horizontal verläuft, also gegenüber der Horizontalen um einen von null verschiedenen Winkel verkippt ist. Insbesondere kann die Welle überwiegend vertikal ausgerichtet sein. Dies bedeutet, dass ein Winkel, den die Drehachse und eine vertikal verlaufende Gerade einschließen, kleiner als 45° ist. Vorzugsweise ist dieser Winkel kleiner als 35°, kleiner als 30°, kleiner als 25°, kleiner als 20°, kleiner als 15°, kleiner als 10°, kleiner als 5° oder gleich 0. Im letztgenannten Fall verläuft die Drehachse vertikal und ist mit der vertikal ausgerichteten Geraden identisch.

Die Nut verläuft in einer darüber hinaus bevorzugten Weiterbildung mindestens teilweise, vorzugsweise vollständig zwischen der Mündung des Sacklochs und der Innenverzahnung, oder die Nut verläuft mindestens teilweise, bevorzugt vollständig durch Innenverzahnung hindurch. Dies hat zur Folge, dass sich bei einer mindestens teilweise vertikalen Ausrichtung der Welle mindestens ein Teil der Passverzahnung unterhalb der Nut befindet. Hat sich Schmierstoff in der Nut gesammelt und verlangsamt sich die Drehzahl der Welle, tritt der Schmierstoff aus der Nut aus und schmiert diesen Teil der Innenverzahnung. (Oben einfügen: Im letztgenannten Fall teilt die Nut die Innenverzahnung in zwei Hälften, die sich auf unterschiedlichen Seiten der Nut befinden. Im erstgenannten Fall befinden sich die Mündung des Sacklochs und die Innenverzahnung auf unterschiedlichen Seiten der Nut)

Die Nut ist bevorzugt derart weitergebildet, dass sie ausschließlich mit einem oder mehreren Fluiden gefüllt ist. Ein Fluid ist ein gasförmiger oder flüssiger Stoff. Vorzugsweise ist der Stoff bei Zimmertemperatur und/oder bei Betriebstemperatur einer Anordnung, beispielsweise eines Getriebes, welche die Welle enthält, gasförmig oder flüssig. Insbesondere kann es sich bei den Fluiden um Luft und/oder Schmierstoff handeln. Weiterbildungsgemäß befindet sich kein Dicht- oder Sicherungsring in der Nut.

Die Welle ist bevorzugt als Teil einer Anordnung weitergebildet, die darüber hinaus eine weitere Welle mit einer Außenverzahnung umfasst. Die Innenverzahnung und die Außenverzahnung bilden eine Passverzahnung. Mindestens ein Teil der Außenverzahnung befindet sich dabei in dem Sackloch.

Bevorzugt ist die Anordnung als Teil eines Getriebes weitergebildet.

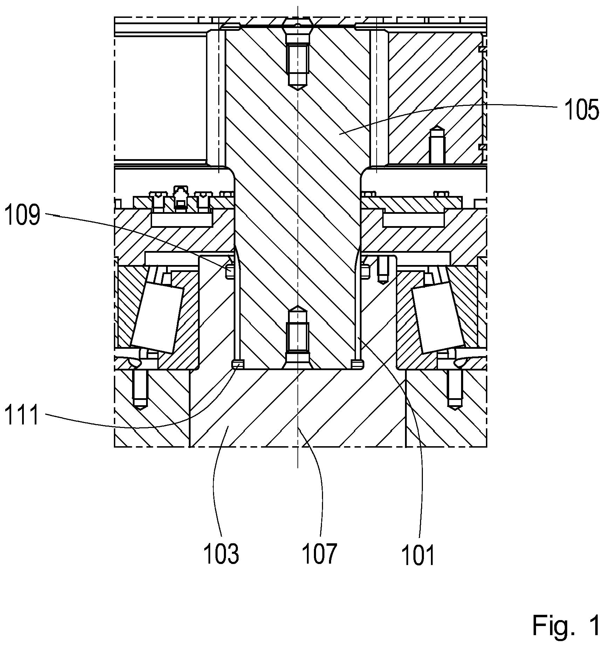

Ein bevorzugtes Ausführungsbeispiel der Erfindung ist in Fig. 1 dargestellt. Im Einzelnen zeigt:
Fig. 1 eine Passverzahnung.

Die in Fig. 1 dargestellte Passverzahnung 101 verbindet eine erste Welle 103 und eine zweite Welle 105 drehfest miteinander. Die erste Welle 103 und die zweite Welle 105 sind um eine gemeinsame Drehachse 107 drehbar gelagert. Die beiden Wellen 103, 105 und damit auch ihre Drehachse 107 sind vertikal ausgerichtet. Über die Passverzahnung 101 lassen sich Drehmomente zwischen den beiden Wellen 103, 105 übertragen.

Die erste Welle 107 weist an ihrer Stirnseite eine Sacklochbohrung auf, die bezüglich der Drehachse 107 rotationssymmetrisch ist, und in die eine Innenverzahnung eingebracht wurde. Die zweite Welle 105 weist eine entsprechende Außenverzahnung auf. Diese bildet mit der Innenverzahnung die Passverzahnung 101. Entsprechend befindet sich die zweite Welle 105 mit einem Teil, der die Außenverzahnung ausbildet, innerhalb des Sacklochs.

Die erste Welle 103 weist eine erste Nut 109 und eine zweite Nut 111 auf. Die beiden Nuten befinden sich in dem Sackloch und sind rotationssymmetrisch in engerem Sinne zu der Drehachse 107. Die erste Nut 109 verläuft zwischen der Innenverzahnung und einer Mündung des Sacklochs. Am Fuße des Sacklochs ist die zweite Nut 111 angeordnet. Die zweite Nut 111 verläuft entlang des Rands einer Bodenfläche des Sacklochs. Zwischen der ersten Nut 109 und der zweiten Nut 111 erstreckt sich die Innenverzahnung.

Stehen die Wellen 103, 105 still, läuft von oben Schmierstoff in die Passverzahnung hinein. Dadurch füllen sich die erste Nut 109 und die zweite Nut 111 mit Schmierstoff.

Bei einer schnellen Drehung der beiden Wellen 103, 105 wird der Schmierstoff durch die auftretenden Zentrifugalkräfte wieder aus der Passverzahnung 101 hinausgedrückt. Die Nuten 109, 111 sind allerdings radial nach innen zu der Drehachse 107 hin geöffnet. Entsprechend sind sie radial nach außen von der Drehachse 107 weg geschlossen. Dies führt dazu, dass sich in den Nuten 109, 111 Schmierstoff sammelt.

Verlangsamt sich die Drehung der Wellen 103, 105, schwächen sich die auf den Schmierstoff wirkenden Zentrifugalkräfte ab. Infolgedessen tritt der Schmierstoff aus der Nute 109 aus und fließt in die Passverzahnung 101.

### Bezugszeichen

- 101: Passverzahnung
- 103: erste Welle
- 105: zweite Welle
- 107: Drehachse
- 109: erste Nut
- 111: zweite Nut

## Patentansprüche

1. Welle (103) mit mindestens einem Sackloch, dass eine Innenverzahnung für eine Passverzahnung (101) ausbildet; **dadurch gekennzeichnet, dass** das Sackloch mindestens eine Nut (109, 111) zum Auffangen von Schmierstoff aufweist.

2. Welle (103) nach dem vorhergehenden Anspruch; **dadurch gekennzeichnet, dass** das Sackloch zu einer Drehachse (107) der Welle (103) drehsymmetrisch ist.

3. Welle (103) nach einem der vorhergehenden Ansprüche, **dadurch gekennzeichnet, dass**
die Nut (109, 111) mindestens teilweise radial zu der Drehachse (107) hin geöffnet ist.

4. Welle (103) nach einem der vorhergehenden Ansprüche; **dadurch gekennzeichnet, dass**
die Nut (109, 111) von der Drehachse (107) ausgehend radial nach außen hin mindestens teilweise geschlossen ist.

5. Welle (103) nach einem der vorhergehenden Ansprüche; **dadurch gekennzeichnet, dass**
eine Öffnung der Nut (109, 111) mindestens teilweise parallel zu der Drehachse (107) ausgerichtet ist.

6. Welle (103) nach einem der vorhergehenden Ansprüche, **dadurch gekennzeichnet, dass**
die Welle (103) mindestens teilweise vertikal ausgerichtet ist.

7. Welle (103) nach einem der vorhergehenden Ansprüche; **dadurch gekennzeichnet, dass**
die Nut (109, 111) mindestens teilweise zwischen einer Mündung des Sacklochs und der Innenverzahnung oder durch die Innenverzahnung hindurch verläuft.

8. Welle (103) nach einem der vorhergehenden Ansprüche; **dadurch gekennzeichnet, dass**
die Nut (109, 111) ausschließlich mit einem oder mehreren Fluiden gefüllt ist.

9. Anordnung; **gekennzeichnet durch**
eine Welle (103) nach einem der vorhergehenden Ansprüche; wobei
die Anordnung eine Welle (105) mit einer Außenverzahnung umfasst; und wobei
die Innenverzahnung und die Außenverzahnung eine Passverzahnung (101) bilden.

10. Getriebe; **gekennzeichnet durch**
eine Anordnung nach dem vorhergehenden Anspruch.
